# EUROPÄISCHE PATENTSCHRIFT

(11) **EP 0 640 899 B1**
(45) Veröffentlichungstag und Bekanntmachung des Hinweises auf die Patenterteilung: **07.10.1998**
(21) Anmeldenummer: 94111673.3
(22) Anmeldetag: 27.07.1994
(51) Int. Cl.: G05B 19/042, G06F 1/00, G07F 17/16

(54) **Verfahren zur Programmierung eines Speichermittels und Einrichtung zur Durchführung des Verfahrens**
Method for programming a memory means and apparatus for carrying out this method
Méthode de programmation d'un moyen de mémoire et appareil pour sa mise en oeuvre

(30) Priorität: 24.08.1993 CH 2514/93
(43) Veröffentlichungstag der Anmeldung: 01.03.1995
(73) Patentinhaber: Landis & Gyr Technology Innovation AG, 6301 Zug (CH)
(72) Erfinder: Eckstein, Volker, CH-6312 Steinhausen (CH)
(74) Vertreter: Müller, Hans-Jürgen, Dipl.-Ing.

(56) Entgegenhaltungen:
- EP-A- 0 109 189
- EP-A- 0 122 040
- EP-A- 0 195 098
- EP-A- 0 503 256
- US-A- 4 593 376
- US-A- 4 677 565
- US-A- 4 949 257
- PATENT ABSTRACTS OF JAPAN vol. 3, no. 61 (E-113) 26. Mai 1979 & JP-A-54 039 699 (TOSHIBA CORP.) 27. März 1979

## Beschreibung

Die Erfindung bezieht sich auf ein Verfahren zur Programmierung eines Speichermittels sowie auf eine Einrichtung zur Durchführung des Verfahrens gemäss den Oberbegriffen der Ansprüche 1 und 6.

Solche Verfahren eignen sich beispielsweise zur anwendungsspezifischen Programmierung eines Speichermittels einer programmierbaren Steuer- und Regeleinrichtung.

Aus der US 4 949 257 ist ein Verfahren bzw. eine Verkaufseinrichtung nach den Oberbegriffen der Ansprüche 1 bzw. 6 für vollständige Computerprogramme bekannt, bei der ein von einem Käufer ausgewähltes, vollständiges Computerprogramm von einem zentralen Datenspeicher auf einen Datenträger kopiert wird. Die Verkaufseinrichtung verfügt über einen Kartenleser zum Lesen einer Kreditkarte und ist über ein Modem mit einer Einheit verbindbar, durch welche die Kreditwürdigkeit einer in den Kartenleser eingeschobenen Kreditkarte feststellbar ist. Die Kosten für das vom Käufer ausgewählte Computerprogramm können später über das Kreditkarten-institut des Käufers eingefordert werden.

Die US 4 593 376 und die US 4 677 565 offenbaren Verkaufseinrichtungen für vollständige Computerprogramme (beispielsweise Computerspiele), wobei ein Programm durch Münzen abgeltbar ist und nach dem Bezahlen eines entsprechenden Betrages auf einen in die Verkaufseinrichtung eingeschobenen Datenträger kopiert wird.

Die EP 0 503 256 A1 offenbart ein Verfahren, bei dem in einem Festwertspeicher einer Steuer- und Regeleinrichtung eine Verknüpfungsinformation für Funktionsblöcke einer Funktionsblock-Bibliothek abgespeichert wird. Die Funktionalität der Steuer- und Regeleinrichtung ist durch den Inhalt der Verknüpfungsinformation bestimmt und damit durch eine entsprechende Ausgestaltung der Verknüpfungsinformation in grossem Umfang zusammenstellbar; das hat den Vorteil,daß die Steuer- und Regeleinrichtung an verschiedenartige Aufgaben anpassbar ist.

Der für einen Käufer der Steuer- und Regeleinrichtung akzeptierbare Preis ist wesentlich von der Funktionalität der Steuer- und Regeleinrichtung abhängig.

Der Erfindung liegt die Aufgabe zugrunde, ein Verfahren zur Programmierung eines Speichermittels anzugeben, durch welches der Marktwert der Programmierung abgegolten wird, und eine Einrichtung zu schaffen, mit der das Verfahren durchführbar ist.

Die genannte Aufgabe wird erfindungsgemäss durch die Merkmale der Ansprüche 1 und 6 gelöst. Vorteilhafte Ausgestaltungen ergeben sich aus den abhängigen Ansprüchen.
Verfahren zur Abgeltung von Dienstleistungen mit Hilfe eines vorbezahlten Guthabenmittels sind an sich bekannt (z. B. A. Beutelspacher et al, Kann man mit Bits bezahlen, InformatikSpektrum, SpringerVerlag 1993, 16: 99-106).

Nachfolgend werden Ausführungsbeispiele der Erfindung anhand der Zeichnung näher erläutert.

Es zeigen:
- Fig. 1: ein elektronisches Gerät mit einem anwendungsabhängig zusammengestellten Programmteil,
- Fig. 2: eine Einrichtung zur Erstellung des Programmteils und
- Fig. 3: ein Datenflussdiagramm zur Erstellung des Programmteils.

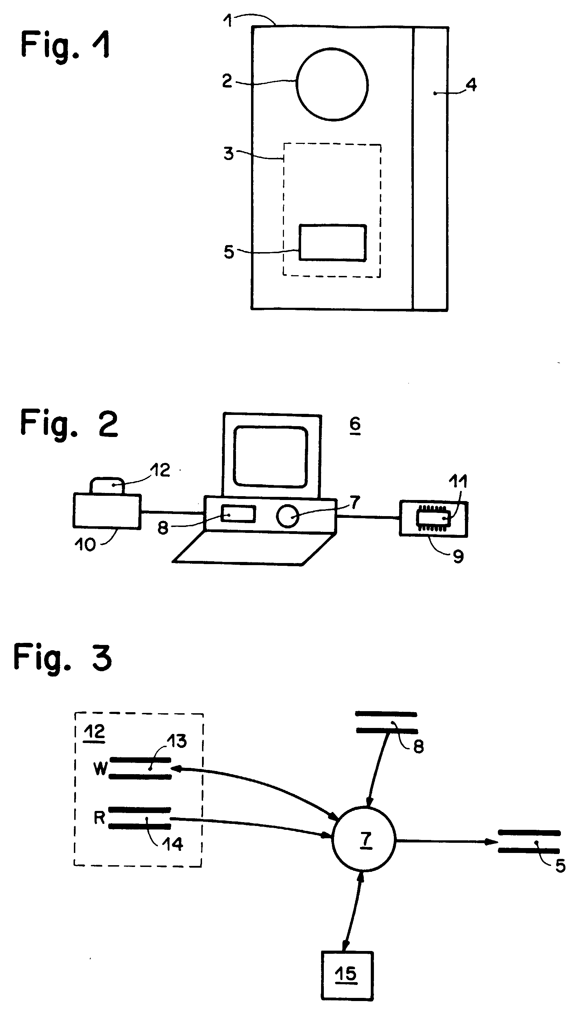

In der Fig. 1 bedeutet 1 ein elektronisches Gerät, das einen Prozessor 2, eine Speicheranordnung 3 sowie Eingabe- und Ausgabeschnittstellen 4 aufweist. Das elektronische Gerät 1 ist beispielsweise eine Steuer-und Regeleinrichtung, deren Funktionalität von einem in einem Bereich der Speicheranordnung 3 gespeicherten Programmteil 5 abhängig ist. Die Eingabe- und Ausgabeschnittstellen 4 sind für Fühler und Stellglieder ausgebildet.

Die Funktionalität der Steuer- und Regeleinrichtung beinhaltet beispielsweise das dynamische Verhalten der Regeleinrichtung, das zeitliche Verhalten von Signalen an den Ausgabeschnittstellen sowie die Wandlung oder die Begrenzung von Signalen an den Eingabe- und Ausgabeschnittstellen 4.

Bei Bedarf weist die Speicheranordnung 3 verschiedenartige bekannte Speicherbausteine bzw. Speichersysteme auf. Als Beispiel seien Festwertspeicher (Programmable Read Only Memory, PROM), löschbare Festwertspeicher (Erasable Programmable Read Only Memory, EPROM) und Speicher mit wahlweisem Zugriff (Random Access Memory, RAM) oder auch magnetische Speicher genannt.

Der Programmteil 5 ist entsprechend dem vorgesehenen Verwendungszweck des elektronischen Gerätes 1 ausgebildet und in der Speicheranordnung 3 mit Vorteil in einem Festwertspeicher abgelegt.

Der Programmteil 5 ist Teil eines dem Gerät 1 zweckdienlichen Programmsystems, das vom Prozessor 2 ausführbar ist. Die Eingabe- und Ausgabeschnittstellen 4 sind durch das Programmsystem bedienbar.

In der Fig. 2 ist mit 6 ein Computer - beispielsweise ein Personalcomputer oder eine sogenannte Workstation - bezeichnet, auf dem ein Prozess 7 gestartet werden kann, der über eine Software-Library 8 verfügt. Der Prozess 7 ist ein auf einem oder mehreren verteilten Prozessoren laufendes Programm oder Programmsystem.

Der Computer 6 ist mit einer ersten Einrichtung 9 und mit einer zweiten Einrichtung 10 verbunden. Mit der ersten Einrichtung 9 ist ein Speichermittel 11 programmierbar. Der Wert eines Guthabenmittels 12 ist mit der zweiten Einrichtung 10 lesbar und auch veränderbar.

Ein sogenannter vorbezahlter elektronischer Gutschein (Informatik Spektrum, Springer Verlag 1993, 16: 99-106) steht beispielhaft für das Guthabenmittel 12. Die zweite Einrichtung 10 ist eine auf das Guthabenmittel 12 abgestimmte bekannte Vorrichtung zum Lesen und Verändern des Gutscheinwertes.

Das Speichermittel 11 wird mit dem Programmteil 5 programmiert, das heisst, dass der Code des Programmteils 5 vorzugsweise mit Hilfe des Prozesses 7 erzeugt oder zusammengestellt und im Speichermittel 11 abgespeichert wird, wobei der Prozess 7 die Software-Library 8 benutzt, in welcher Elemente - beispielsweise Unterprogramme und/oder Tabellen - verfügbar sind, mit Hilfe derer die Funktionalität des elektronischen Gerätes durch einen den Prozess 7 teilweise steuernden Bediener des Computers 6 zusammengestellt und ausgestaltet wird.

Der Bediener wird beim Zusammenstellen und Ausgestalten des Code des Programmteils 5 mit Vorteil vom Prozess 7 aus beispielsweise durch Graphikdarstellungen und/oder Menüs geführt. Der Prozess 7 bietet dem Bediener beispielsweise ein Menü mit den aus der Software-Library 8 wählbaren Funktionen an und/oder der Prozess 7 stellt dem Bediener Fragen zur gewünschten Funktionalität des Gerätes 1.

Das Speichermittel 11 ist Teil der Speicheranordnung 3. Vorzugsweise ist das Speichermittel 11 ein Festwertspeicher - beispielsweise ein EPROM - welches nach dessen Programmierung im elektronischen Gerät 1 eingebaut wird.

Der prinzipielle Datenfluss zur Erstellung des Programmteils 5 ist in der Fig. 3 aus einer aus der Literatur bekannten Darstellungsart (D. J. Hatley, I. A. Pirbhai: Strategies for Real-Time System Specification, Dorset House, NY 1988) ersichtlich. Im Diagramm bedeutet ein Kreis eine Aktivität (activity), ein Viereck ein angrenzendes System (terminator) und ein Pfeil einen Kommunikationskanal (channel) zur Übertragung von Daten und/oder Ereignissen, wobei die Pfeilspitze in die wesentliche Datenflussrichtung zeigt. Ein Datenspeicher (pool), der allgemein mehreren Aktivitäten zur Verfügung steht, ist durch zwei gleich lange, parallele Linien dargestellt. Im weiteren ist beispielsweise eine Anordnung aus zwei durch einen Kommunikationskanal verbundene Aktivitäten mit einer einzigen Aktivität, welche alle Aufgaben der beiden Aktivitäten erfüllt, äquivalent.

Das Guthabenmittel 12 weist einen ersten Datenspeicher 13 für ein vorbezahltes Guthaben W und bei Bedarf einen zweiten Datenspeicher 14 für ein Benutzungsrecht R auf. Der als Aktivität dargestellte Prozess 7 ist je über einen Kanal mit dem ersten Datenspeicher 13, mit dem zweiten Datenspeicher 14, mit der Software-Library 8, mit dem Programmteil 5 und mit einem Ein/Ausgabegerät 15 des Computers 6 (Fig. 2) verbunden.

Das Ein-/Ausgabegerät 15 ist vorzugsweise ein graphikfähiges Bildschirmterminal.

Ein vorteilhaftes Verfahrens zur Programmierung des Speichermittels 11 für das elektronische Gerät 1, dessen Funktionalität vom Inhalt des Speichermittels 11 abhängig ist, weist mindestens vier nachfolgend beschriebene Schritte auf, welche mit Vorteil durch den Prozess 7 ausgeführt oder veranlasst werden:
- Einen ersten Schritt, in welchem mit Hilfe einer Einrichtung, die aus dem Computer 6 mit dem Prozess 7 und der Software-Library 8 besteht, der Programmteil 5 generiert wird, welcher die gewünschte Funktionalität des Gerätes 1 bewirkt.
- Einen zweiten Schritt, in welchem ein vom generierten Programmteil 5 abhängiger vorbestimmter Preis durch den Prozess 7 selbsttätig errechnet wird, wobei der Preis mit Vorteil von der Grösse und/oder der Komplexität des Programmteils 5 abhängig ist.
   Zum Vorteil einer flexiblen Preisgestaltung weist die Software-Library 8 auf ihre Elemente bezogene Daten zur Preisberechnung - beispielsweise den Kostensatz jedes Elementes - auf. Damit ist ein auf die im Programmteil 5 konfigurierte Funktionalität des elektronischen Gerätes 1 abgestützter Preis berechenbar, wobei auch die bei der Entwicklung bestimmter Elemente der Software-Library 8 angefallenen Kosten dem Aufwand gemäss berücksichtigt werden.
- Einem dritten Schritt, in welchem der Preis im Guthabenmittel 12 vom Prozess 7 selbsttätig abgegolten und zudem der Programmteil 5 nach der erfolgreichen Abgeltung des Preises zur Speicherung im Speichermittel 11 selbsttätig freigegeben wird.
   Bei der Abgeltung wird das Guthaben W im ersten Datenspeicher 13 um dem Preis des Programmteils 5 vermindert.
- Einen vierten Schritt, in welchem das Speichermittel 11 mit dem abgegoltenen und freigegebenen Programmteil 5 programmiert wird, indem der Programmteil 5 selbsttätig im Speichermittel 11 abgespeichert wird.

In einer ersten Variante des Verfahrens wird im vierten Schritt zusätzlich zum Programmteil 5 ein von der Funktionalität des Gerätes 1 abhängiger Datensatz im Speichermittel 11 abgespeichert. Der Datensatz weist mit Vorteil eine Signatur auf, welche bei Bedarf das Benutzungsrecht, den errechneten Preis, eine Preisklasse oder Bezeichnung des Programmteiles 5 enthält und eine allfällige spätere Überprüfung oder Auswertungbeispielsweise bei der Inbetriebnahme des elektronischen Gerätes 1 - ermöglicht.

Mit Vorteil ist die Generierung des Programmteils 5 und damit die Funktionalität des Gerätes 1 durch das Benutzungsrecht R einschränkbar gestaltet, welches einer verfügbaren Teilfunktion des Gerätes zugeordnet ist. Das Benutzungsrecht R ist dazu vorteilhaft für die Elemente der Software-Library 8 elementweise zugeordnet. Durch die einschränkbare Generierung ist bei Bedarf eine benutzerabhängige Ausschöpfung der funktionellen Möglichkeiten des elektronischen Gerätes 1 erreichbar, so dass einer Klasse von Benutzern beispielsweise vorbestimmte Teilfunktionen nicht zur Verfügung gestellt sind.

Beispielsweise wird das Einbeziehen einer an sich in der Software-Library 8 verfügbaren Regler- oder Steuerfunktion in den Programmteil 5 durch das Benutzungsrecht R entweder freigegeben oder dann verhindert.

Im Guthabenmittel 12 ist in einer vorteilhaften Variante auch das geltende Benutzungsrecht R abgespeichert.

Das Guthabenmittel 12 ist mit Vorteil eine bekannte Wertkarte, beispielsweise eine Chip-Karte, eine optisch codierte Karte oder eine Magnetkarte. Als Beispiel für das Guthabenmittel 12 sei eine Karte der Norm International Organization for Standardization ISO 7816 genannt.

Dadurch, dass beim Generieren des Programmteils 5 dessen Preis selbsttätig errechnet wird und der Programmteil 5 selbsttätig erst nach erfolgreicher Abgeltung zum Speichern im Speichermittel 11 freigegeben wird, ist der von der Funktionalität des elektronischen Gerätes 1 abhängige Marktwert des Programmteils 5 auf einfache Art sicher verrechnet.

Mit dem Guthaben W zusammen kann einem Abnehmer des Gerätes 1 die gewünschte Stufe des Benutzungsrechts R in Kartenform verkauft werden, wobei das Guthaben W im allgemeinen mit Vorteil zur Konfiguration mehrerer Exemplare des Gerätes 1 vorgesehen ist.

Das offenbarte Verfahren ermöglicht dem Produzenten bzw. dem Käufer des elektronischen Gerätes 1 beispielsweise die nachfolgend geschilderte Vorgehensweise:
- Der Produzent fertigt das elektronische Gerät 1 in grossen Stückzahlen und liefert dem Käufer im allgemeinen mehrere Exemplare des Gerätes 1 ohne den Programmteil 5 zu einem relativ niedrigen Preis.
- Zudem verkauft der Produzent das Guthabenmittel 12, welches das vom Käufer gewünschte Guthaben W sowie das auf das Anwendungs- oder Betätigungsgebiet des Käufers abgestimmte Benutzungsrecht R aufweist.
- Im weiteren vermittelt oder verkauft der Produzent die Einrichtung mit dem Computer 6, der Software-Library 8 und dem Prozess 7 zur Durchführung des Verfahrens für die gelieferten Exemplare.
- Der Käufer konfiguriert die Exemplare des elektronischen Gerätes 1 nach seinen Anforderungen, wobei der Preis jeweils für jedes Exemplar bezogen auf dessen Funktionalität selbsttätig berechnet und im Guthabenmittel 12 abgebucht wird.

Durch das Verfahren sind die bei der Entwicklung des elektronischen Gerätes 1 und der Entwicklung der Software-Library 8 anfallenden Kosten auf vorteilhafte Art zuverlässig und selbsttätig abgeltbar, wobei dem Käufer des Gerätes 1 nur die von ihm im Programmteil 5 eingebauten Funktionen verrechnet werden.

Das Verfahren ist allgemein für elektronische Geräte anwendbar, deren Funktionalität durch anwendungsorientierte Benutzung und Kombination verfügbarer Software-Elemente zusammenstellbar ist.

Das beschriebene Verfahren ist auf weitere elektronische Zahlungsmittel - beispielsweise auf Kreditmittel - umsetzbar.

## Patentansprüche

1. Verfahren zur Programmierung eines Speichermittels (11) für ein elektronisches Gerät (1), wobei
ein die gewünschte Funktionalität des Gerätes (1) bewirkender Programmteil (5) aus einer Software-Bibliothek (8) eines Computers (6) ausgewählt und in dem Speichermittel (11) abgespeichert wird und daß der vom Programmteil (5) abhängige Preis abgegolten wird,
**dadurch gekennzeichnet,**
daß der Programmteil (5) aus einzelnen Elementen der Software-Bibliothek (8) durch den Computer (6) erzeugt oder zusammengestellt wird,
daß der von den einzelnen Elementen abhängige Preis des Programmteils (5) errechnet wird,
daß der Preis in einem Guthabenmittel (12) abgegolten wird, und
daß durch die Abgeltung des Preises der Programmteil (5) zur Speicherung im Speichermittel (11) freigegeben wird.

2. Verfahren nach Anspruch 1,
dadurch gekennzeichnet,
daß zusätzlich zum Programmteil (5) mindestens ein von der Funktionalität des Geräts (1) abhängiger Datensatz im Speichermittel (11) abgespeichert wird.

3. Verfahren nach einem der Ansprüche 1 oder 2,
dadurch gekennzeichnet,
daß die Zusammenstellung des Programmteils (5) und damit die Funktionalität des Gerätes (1) durch ein Benutzungsrecht (R) einschränkbar gestaltet wird, welches einer verfügbaren Teilfunktion des Gerätes (1) zugeordnet ist.

4. Verfahren nach Anspruch 3,
dadurch gekennzeichnet,
daß als Guthabenmittel (12) ein Mittel verwendet wird, in welchem auch das geltende Benutzungsrecht (R) abgespeichert wird.

5. Verfahren nach einem der vorhergehenden Ansprüche,
dadurch gekennzeichnet,
daß das Speichermittel (11) in eine Speicheranordnung (3) des Geräts (1) eingesetzt wird.

6. Einrichtung zur Programmierung eines Speichermittels (11) für ein elektronisches Gerät (1), mit
einem Computer (6), auf dem ein Prozess (7) gestartet werden kann, der über eine Software-Bibliothek (8) verfügt,
einer ersten Einrichtung (9) zur Programmierung eines Speichermittels (11), und mit
einer zweiten Einrichtung (10) zum Lesen und Verändern eines Guthabenmittels (12),
**dadurch gekennzeichnet,**
daß der Prozess (7) Elemente der Software-Bibliothek (8) zu einem Programmteil (5), das die Funktionalität des Geräts (1) bewirkt, zusammenstellt,
daß der Prozess (7) einen von den einzelnen Elementen des Programmteils (5) abhängigen Preis berechnet,
daß die zweite Einrichtung (10) das Guthabenmittel (12) entsprechend dem berechneten Preis verändert, und
daß die erste Einrichtung (9) das Speichermittel (11) mit dem Programmteil (5) programmiert.

7. Einrichtung nach Anspruch 6,
dadurch gekennzeichnet,
daß das Guthabenmittel (12) eine vorbezahlte Wertkarte ist.

8. Einrichtung nach einem der Ansprüche 6 oder 7,
dadurch gekennzeichnet,
daß auf dem Guthabenmittel (12) ein einer Funktion des Geräts (1) zugeordnetes Benutzungsrecht (R) abgespeichert ist.

9. Einrichtung nach einem der Ansprüche 6 bis 8,
dadurch gekennzeichnet,
daß das Speichermittel (11) ein Teil einer Speicheranordnung (3) des Geräts (1) ist.

10. Einrichtung nach einem der Ansprüche 6 bis 9,
dadurch gekennzeichnet,
daß das Speichermittel (11) ein Festwertspeicher (EPROM) ist.

## Claims

1. A method of programming a memory means (11) for an electronic apparatus (1), wherein a program portion (5) for bringing about the desired functionality of the apparatus (1) is selected from a software library (8) of a computer (6) and stored in the memory means (11) and the price which is dependent on the program portion (5) is paid,
characterised in that
the program portion (5) is produced or assembled from individual elements of the software library (8) by the computer (6),
the price of the program portion (5), which is dependent on the individual elements, is calculated,
the price is paid in a credit means (12), and
the program portion (5) is released for storage in the memory means (11) by virtue of payment of the price.

2. A method according to claim 1 characterised in that in addition to the program portion (5) at least one data set which is dependent on the functionality of the apparatus (1) is stored in the memory means (11).

3. A method according to one of claims 1 and 2 characterised in that assembly of the program portion (5) and therewith the functionality of the apparatus (1) is organised to be limitable by a right of use (R) which is associated with an available sub-function of the apparatus (1).

4. A method according to claim 3 characterised in that a means in which the applicable right of use (R) is also stored is used as the credit means (12).

5. A method according to one of the preceding claims characterised in that the memory means (11) is fitted into a memory array (3) of the apparatus (1).

6. A device for programming a memory means (11) for an electronic apparatus (1), comprising
a computer (6) on which a process (7) can be started, which has a software library (8),
a first device (9) for programming a memory means (11), and
a second device (10) for reading and altering a credit means (12),
characterised in that
the process (7) assembles elements of the software library (8) to form a program portion (5) which brings about functionality of the apparatus (1),
the process (7) calculates a price which is dependent on the individual elements of the program portion (5),
the second device (10) alters the credit means (12) in accordance with the calculated price, and
the first device (9) programs the memory means (11) with the program portion (5).

7. A device according to claim 6 characterised in that the credit means (12) is a prepaid value card.

8. A device according to one of claims 6 and 7 characterised in that stored on the credit means (12) is a right of use (R) which is associated with a function of the apparatus (1).

9. A device according to one of claims 6 to 8 characterised in that the memory means (11) is a part of a memory array (3) of the apparatus (1).

10. A device according to one of claims 6 to 9 characterised in that the memory means (11) is a read only memory (EPROM).

## Revendications

1. Dispositif pour programmer un moyen de mémoire (11) pour un dispositif électronique (1), dans lequel une partie du programme (5) accomplissant la fonctionnalité souhaitée du dispositif (1) est choisie à partir d'une bibliothèque de logiciels (8) d'un ordinateur (6) et est stockée dans le moyen de mémoire (11) et le prix est payé en fonction de la partie du programme (5),
caractérisé en ce que,
la partie du programme (5) est établie ou composée par l'ordinateur (6) à partir d'éléments séparés de la bibliothèque de logiciels (8),
le prix dépendant des éléments séparés de la partie du programme (5) est calculé,
le prix est payé dans un moyen d'avoir (12), et
par le paiement du prix, la partie du programme (5) est libérée pour stockage dans un moyen de stockage (11).

2. Dispositif conforme à la revendication 1, caractérisé en ce que,
outre la partie du programme (5) une au moins un jeu de données dépandant des fonctionnalités du dispositif (1) est mis en mémoire dans le moyen de mémoire (11).

3. Procédé selon l'une des revendications 1 ou 2, caractérisé en ce que,
la composition de la partie du programme (5) et par conséquent la fonctionnalité du dispositif (1) est arrangée de manière à être limitée par un droit d'utilisation (R), lequel est adjoint à une partie fonctionnelle disponible du dispositif (1).

4. Dispositif conforme à la revendication 3, caractérisé en ce que,
un moyen est utilisé comme moyen d'avoir (12), dans lequel également le droit d'utilisation valide (R) est mis en mémoire.

5. Procédé conforme à l'une quelconque des revendications précédentes, caractérisé en ce que,
le moyen de mémoire (11) est mis en oeuvre dans un arrangement de mémoire (3) du dispositif (1).

6. Dispositif pour programmer un moyen de mémoire (11) pour un dispositif électronique (1), possédant :
un ordinateur (6), dans lequel un processus (7) peut être démarré, qui dispose d'une bibliothèque de logiciels (8),
un premier agencement (9) pour programmer un moyen de mémoire (11), et
un deuxième agencement (10) pour lire et modifier un moyen d'avoir (12),
caractérisé en ce que,
le processus (7) compose des éléments de la bibliothèque de logiciels (8) pour une partie du programme (5), qui détermine la fonctionnalité de l'appareil (1),
le processus (7) calcule un prix dépendant des éléments séparés de la partie du programme (5),
le deuxième agencement (10) du moyen d'avoir (12) modifie le prix calculé en correspondance, et
le premier agencement (9) programme le moyen de mémoire (11) avec la partie du programme (5).

7. Dispositif conforme à la revendication 6, caractérisé en ce que,
le moyen d'avoir (12) est une carte de valeur prépayée.

8. Dispositif conforme à l'une des revendications 6 ou 7, caractérisé en ce que,
un droit d'utilisation (R) appliqué à une fonction du dispositif (1) est mis en mémoire dans le moyen d'avoir (12).

9. Dispositif conforme à l'une des revendications 6 à 8, caractérisé en ce que,
le moyen de mémoire (11) est une partie d'un agencement de mémoire (3) du dispositif (1).

10. Dispositif conforme à l'une des revendications 6 à 9, caractérisé en ce que,
le moyen de mémoire (11) est une mémoire dont la valeur est fixe (EPROM).
